# EUROPÄISCHE PATENTANMELDUNG

(11) **EP 4 726 318 A1**
(43) Veröffentlichungstag der Anmeldung: **15.04.2026**
(21) Anmeldenummer: 24206064.8
(22) Anmeldetag: 11.10.2024
(51) Int. Cl.: F28F 9/16, F28D 7/16, F28F 9/18

(54) **ABHITZEKESSEL ZUM KÜHLEN EINES PROZESSGASSTROMS**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: COSCIA, Antonio, 60439 Frankfurt am Main (DE); DURST, Oliver, 60439 Frankfurt am Main (DE)
(74) Vertreter: Air Liquide

(57) **Zusammenfassung**

Die Erfindung betrifft einen Abhitzekessel (1) zum Kühlen eines durch mehrere Wärmeaustauschrohre (6) strömenden Prozessgastroms aus einem Reformierungsprozess, der in einer chemischen Prozessanlage gebildet wird, aufweisend eine Wärmeaustauschkammer (2) zum Aufnehmen eines die Wärmeaustauschrohre (6) umgebenden flüssigen Kühlmediums; wenigstens eine Rohrplatte (4), um eine dichte Trennwand zwischen der Wärmeaustauschkammer (2) und einer Einlasskammer (3) für das zu kühlende Prozessgas zu bilden, wobei die Rohrplatte (4) für jedes Wärmeaustauschrohr (6) eine durchgehende Öffnung (13) aufweist, die an ein erstes Ende (14) des jeweiligen Wärmeaustauschrohrs (6) fluiddicht angeschlossen ist. Die Erfindung umfasst ein Dichtung, die eine geringere Wärmeleitfähigkeit als eine in der Öffnung (13) angeordnete Hülse (17) und/oder die Rohrplatte (4) aufweist und eine Gasdurchlässigkeit, die geringer ist als die des ersten und/oder des zweiten Abschnitts (18, 21) einer Wärmeisolierung (19).

## Beschreibung

### TECHNISCHES GEBIET

Die Erfindung betrifft einen Abhitzekessel zum Kühlen eines durch mehrere Wärmeaustauschrohre strömenden Prozessgastroms aus einem Reformierungsprozess, der in einer chemischen Prozessanlage gebildet wird. Ferner betrifft die Erfindung die Verwendung eines Abhitzekessels zur Kühlung eines Prozessgastroms aus einem Reformierungsprozess und eine Reformierungsanlage.

### HINTERGRUND DER ERFINDUNG

In chemischen Prozessanlagen, insbesondere bei Reformierungsprozessen wie Steam Methane Reforming (SMR), Autothermal Reforming (ATR) und der Partialoxidation (POx), sind Abhitzekessel von zentraler Bedeutung. Diese Prozesse erzeugen Synthesegas aus leichten Kohlenwasserstoffen und produzieren dabei hohe Temperaturen, die eine effiziente Kühlung und Wärmerückgewinnung erfordern.

Abhitzekessel (Englisch: waste heat boilers) nutzen die Wärmeenergie aus den heißen Prozessgasen, die bei diesen Reformierungsprozessen entstehen. Das heiße Synthesegas oder Prozessgas wird durch Wärmeaustauschrohre geleitet, die in einer Wärmeaustauschkammer, wie beispielsweise einer Dampfkammer, auch Dampferzeugungsraum genannt, angeordnet sind. In einer Dampfkammer wird durch Wärmeübertragung von dem Prozessgas auf Wasser Dampf erzeugt. Der Dampf kann in anderen Prozessen als Heizmedium oder als Prozessdampf genutzt werden.

Die Reformierungsprozesse sind durch hohe Temperaturen gekennzeichnet, weshalb eine effiziente Wärmeabfuhr und Nutzung der Abwärme erforderlich ist. Beim Steam Methane Reforming (SMR) wird Methan zusammen mit Wasserdampf und einem Katalysator in einem Temperaturbereich von 700°C bis 1.000°C in Synthesegas umgewandelt. Die dabei entstehende hohe Temperatur des Synthesegases erfordert eine effektive Kühlung, um das Gas für die Weiterverarbeitung vorzubereiten. Der Autothermal Reforming (ATR)-Prozess reformiert Methan in einem Reaktor bei Temperaturen zwischen 900°C und 1.200°C, wobei Sauerstoff und Wasserdampf hinzugefügt werden. Dieser Prozess kombiniert exotherme und endotherme Reaktionen, was zu einer komplexen Wärmebilanz führt. Auch hier ist der Abhitzekessel entscheidend für die Regulierung der hohen Temperaturen des Synthesegases und sorgt dafür, dass das Gas auf eine sichere Temperatur abgekühlt wird. Bei der Partialoxidation (POx) wird Methan mit einer unterstöchiometrischen Menge Sauerstoff umgesetzt, um Synthesegas zu erzeugen, wobei die Temperaturen ebenfalls zwischen 800°C und 1.200°C liegen. Der Abhitzekessel nimmt die überschüssige Wärme des Synthesegases auf und sorgt dafür, dass das Gas auf eine sichere Temperatur gebracht wird, bevor es weiterverarbeitet wird.

Der Prozess im Abhitzekessel beginnt in der Einlasskammer, in die das heiße Prozessgas aus einer Transferleitung eingeführt wird. Das Prozessgas strömt durch ein System von Wärmeaustauschrohren in der Dampfkammer, die zwischen einer ersten Rohrplatte und einer zweiten Rohrplatte ausgebildet ist. Die Rohrplatten stellen Trennwände dar, die die Dampfkammer von der Einlasskammer und der Auslasskammer trennen. Die Wärmeaustauschrohre erstrecken sich zwischen den Rohrplatten und sind an Öffnungen in diesen angeschlossen. In der Dampfkammer umgibt das Kühlmedium, zumeist Wasser, die Wärmeaustauschrohre und kühlt diese, während das Wasser verdampft. Das abgekühlte Prozessgas wird dann in die Auslasskammer geleitet, von wo es weitertransferiert wird. Die Druckbereiche für das Synthesegas, das in einen Abhitzekessel geleitet wird, variieren je nach Art des Reformierungsprozesses, liegen jedoch typischerweise zwischen 15 und 60 bar. Diese Druckbereiche stellen sicher, dass das Synthesegas effektiv durch den Abhitzekessel geleitet werden kann, bevor es weiterverarbeitet oder in anderen Anwendungen verwendet wird.

Ein bedeutendes Problem bei Reformierungsprozessen und Synthesegas ist ein Korrosionseffekt, bekannt unter dem Namen "Metal Dusting", zu Deutsch Metallstaubbildung. Metal Dusting ist ein Phänomen, bei dem Metalle in einer kohlenmonoxidhaltigen Gasatmosphäre als Folge der Bildung und Eindiffusion von Kohlenstoff nach der Boudouard-Reaktion stark abgebaut werden. Dieser Prozess führt zu einer drastischen Zersetzung der Metalloberflächen und kann die Lebensdauer von Ausrüstungen durch signifikanten Materialverlust erheblich verkürzen. Metal Dusting tritt typischerweise bei Temperaturen zwischen 450°C und 750°C auf. Die Hauptursache für Metal Dusting ist die Wechselwirkung zwischen Metall und aus der Gasphase an der Oberfläche gebildetem Kohlenstoff, was nach der Eindiffusion und Übersättigung des Werkstoffs mit Kohlenstoff zur Bildung von Graphit und Metallkarbiden im Gefüge führt. Der durch diese verursachte innere Druck führt im betroffenen Bereich zur Zerstörung des Werkstoffs unter Herauslösen von Metallpartikeln. In Reformierungsprozessen, wie der Dampfreformierung (SMR), der autothermen Reformierung (ATR) und der Partialoxidation (POx) sind die vorherrschenden Bedingungen besonders günstig für Metal Dusting, denn die Prozessgase enthalten hohe Mengen an Kohlenmonoxid, welches unter den vorgenannten Bedingungen zu elementarem Kohlenstoff umgewandelt werden kann. Wenn diese Gase unter den vorgenannten Bedingungen mit den Metalloberflächen in Kontakt kommen, kann gebildeter Kohlenstoff in das Metall eindringen und es destabilisieren. Die hohen Temperaturen in Reformierungsprozessen bedingen, dass das Synthesegas bei der Abkühlung den für Metal Dusting relevanten Temperaturbereich zwischen etwa 450°C und 750°C durchlaufen muss. Dies birgt das Risiko, dass Metalloberflächen in diesem Temperaturbereich von Metal Dusting angegriffen werden. Um dies zu verhindern, müssen alle synthesegasberührten metallischen Oberflächen entweder kälter als 450°C sein (z.B. die durch Wasser gekühlten Wärmetauscherrohre) oder heißer als 750°C sein. Gelingt dies nicht, kann durch Werkstoffe mit hoher Beständigkeit der Angriff zwar verlangsamt bzw. verzögert und damit die Lebensdauer verlängert, aber ein Angriff nicht dauerhaft verhindert werden.

Eine weitere Herausforderung bei Abhitzekesseln für Reformierungsgase betrifft die notwendige Wärmedämmung. Aufgrund der hohen Temperaturen des in den Abhitzekessel geleiteten Prozessgases ist eine umfassende Wärmedämmung erforderlich. Daher sind Transferleitungen, Einlasskammer und Rohrplatten häufig mit feuerfestem Material isoliert. Besonders kritisch sind die Verbindungen zwischen der Rohrplatte an der Einlasskammer und den Wärmeaustauschrohren, da das Prozessgas hier direkt mit schlecht oder gar nicht gekühlten Metalloberflächen in Kontakt kommen kann und die Bildung von Kohlenstoff in diesem Bereich aufgrund der vorherrschenden Bedingungen besonders gefördert wird. Um diesen Bedingungen standzuhalten, werden hülsenförmige Rohrschutzvorrichtungen, bekannt unter dem englischen Namen "ferrule", eingesetzt. Diese Hülsen werden in den Öffnungen der Rohrplatten platziert, dabei teilweise in die Wärmeaustauschrohre eingesteckt und stehen von der mit Feuerfestbeton isolierten Rohrplatte vor. Eine Isolierung zwischen der Hülse und der Innenfläche des Wärmeaustauschrohrs bzw. der Rohrplatte dient dazu, den Wärmetransfer von Hülse zu Wärmeaustauschrohr bzw. Rohrplatte zu reduzieren und zu gewährleisten, dass die Hülse nicht zu stark abkühlt, so dass die Temperatur der Hülse oberhalb der metal dusting begünstigenden Temperaturen liegt. Gleichzeitig soll die Isolierung ein zu starkes Aufheizen der Wärmeaustauschrohre und der Rohrplatte im Einlassbereich vermeiden, damit deren Temperatur nicht in den metal dusting begünstigenden Temperaturbereich ansteigt.

Die Isolierung zwischen der Hülse und dem Wärmeaustauschrohr ist in gewissen zeitlichen Abständen zu erneuern, da sie nach einiger Betriebsdauer nicht mehr vorhanden ist. Dadurch steigt die Gefahr von Korrosion, wie dem erläuterten metal dusting. Die Erneuerung der Isolierung ist kostenintensiv und mit hohem technischem Aufwand verbunden.

Die Aufgabe der Erfindung besteht daher darin, eine Lösung zu entwickeln, die die Notwendigkeit der häufigen Erneuerung der Isolierung reduziert und dem Auftreten von Korrosion entgegenwirkt.

### ZUSAMMENFASSUNG DER ERFINDUNG

Der Erfindung liegt die Erkennung des folgenden Problems zugrunde. Aufgrund der wesentlich höheren Gasgeschwindigkeit in den Wärmeaustauschrohren im Vergleich zur Einlasskammer ist der statische Druck in den Wärmeaustauschrohren geringer als in der Eintrittskammer (Bernoulli-Effekt). Infolge dieser Druckdifferenz entsteht eine treibende Kraft, die das heiße Prozessgas entlang des Außendurchmessers der in den Wärmeaustauschrohren platzierten Hülsen drückt. Dieser Bypass-Gasstrom kann die Isolierung aus ihrem Sitz herausdrücken und zu Metal Dusting an Rohrplatte und Rohren führen. Diese Problematik konnte nach eingehender Untersuchung insbesondere darauf zurückgeführt werden, dass keine Zersetzungsrückstände der Dichtung gefunden wurden.

Die der Erfindung zugrunde liegende Aufgabe wird gelöst durch einen Abhitzekessel für einen Prozessgastroms aus einem Reformierungsprozess gemäß Anspruch 1. Weitere und bevorzugte Ausführungsformen der Erfindung sind in der nachfolgenden Beschreibung und in den abhängigen Ansprüchen offenbart. Die in den Ansprüchen und in der Beschreibung dargestellten Merkmale sind in beliebiger, technologisch sinnvoller Weise miteinander kombinierbar.

In einem ersten Aspekt der Erfindung wird ein Abhitzekessel zum Kühlen eines durch mehrere Wärmeaustauschrohre strömenden Prozessgastroms aus einem Reformierungsprozess, der in einer chemischen Prozessanlage gebildet wird, vorgeschlagen.

Der Abhitzekessel umfasst eine Wärmeaustauschkammer, beispielsweise eine Dampfkammer, zum Aufnehmen eines die Wärmeaustauschrohre umgebenden flüssigen Kühlmediums, wie insbesondere Wasser. Der Abhitzekessel umfasst ferner wenigstens eine Rohrplatte, um eine dichte Trennwand zwischen der Wärmeaustauschkammer und einer Einlasskammer für das zu kühlende Prozessgas zu bilden, wobei die Rohrplatte für jedes Wärmeaustauschrohr eine durchgehende Öffnung aufweist, die an ein erstes Ende des jeweiligen Wärmeaustauschrohrs fluiddicht angeschlossen ist. Dies dient dazu, das Innere der Wärmeaustauschkammer gegenüber dem Prozessgasstrom abzudichten und um eine Fluidverbindung zwischen den Wärmeaustauschrohren und der Einlasskammer herzustellen. Der Abhitzekessel umfasst ferner eine in der Öffnung angeordnete Hülse (ferrule), die einlasskammerseitig und wärmeaustauschkammerseitig von der Rohrplatte vorsteht, wobei einlasskammerseitig die Hülse in eine feuerfeste Verkleidung eingebettet ist, wobei die Hülse teilweise in dem ersten Ende des Wärmeaustauschrohrs aufgenommen ist und zwischen der Hülse und dem Wärmeaustauschrohr ein erster Teil einer Wärmeisolierung angeordnet ist, wobei zwischen einer inneren Umfangsfläche der Öffnung der Rohrplatte und der sich durch die Öffnung erstreckenden Hülse ein Freiraum ausgebildet ist, in dem ein zweiter Teil einer Wärmeisolierung angeordnet ist. Ferner ist eine Dichtung vorgesehen, die den Freiraum gegenüber der Einlasskammer abdichtet, wobei die Dichtung eine geringere Wärmeleitfähigkeit als die Hülse und/oder die Rohrplatte aufweist und eine Gasdurchlässigkeit, die geringer ist also die des ersten und/oder des zweiten Teils der Wärmeisolierung.

Die Dichtung dichtet die Lücke zwischen Rohrplatte und Hülse effektiv ab und kann an der Rohrplatte und der Hülse anliegen. Der Abhitzekessel kann einen Hauptkörper umfassen, in dem die Wärmeaustauschkammer ausgebildet ist.

Die Dichtung verhindert die oben beschriebenen Gasströme durch den Freiraum, wodurch das Ausdrücken der Isolierung unterbunden werden kann. Dadurch wird auch die Gefahr des metal dustings erheblich reduziert. Außerdem fungiert die Dichtung als Isolator, der den Wärmetransfer von der Hülse zu der Rohrplatte minimiert, wodurch unerwünschte Wärmeübertragung reduziert wird und die Bauteile Rohrplatte, Wärmeaustauschrohr und Hülse außerhalb des für die Entstehung von metal dusting günstigen Temperaturbereichs gehalten werden.

Die Hülse kann aus Keramik oder Metall hergestellt sein. Bevorzugt ist jedoch Metall, da dieses für die bei gattungsgemäßen Abhitzekessel auftretenden mechanischen Belastungen besser geeignet ist. Die effektive Kontrolle der Temperatur der Hülse außerhalb des Bereichs für metal dusting macht den Einsatz von Hülsen aus Metall in effektiver Weise möglich.

Nach einer weiteren Ausführungsform der Erfindung ist vorgesehen, dass die Dichtung den Freiraum direkt gegenüber der feuerfesten Verkleidung abdichtet. Obgleich die Hülse in die feuerfeste Verkleidung eingebettet ist, ist die feuerfeste Verkleidung nicht gasundurchlässig. Eine Hülsenanordnung, die den Freiraum strukturell der feuerfesten Verkleidung aussetzt, d.h. der Freiraum würde unmittelbar an die feuerfeste Verkleidung angrenzen, kann durch Einsatz der Dichtung effektiv vor dem Gaseintritt geschützt werden.

Nach einer weiteren Ausführungsform der Erfindung umfasst der Abhitzekessel ferner eine mit einem zweiten Ende der Wärmeaustauschrohre in Fluidverbindung stehende Auslasskammer zum Sammeln und Ableiten des durch die Wärmeaustauschrohre geleiteten und gekühlten Prozessgasstroms, wobei eine zweite Rohrplatte vorgesehen ist, um eine fluiddichte Trennwand zwischen der Wärmeaustauschkammer und der Auslasskammer bereitzustellen, wobei die zweite Rohrplatte für jedes Wärmeaustauschrohr eine durchgehende Öffnung aufweist, die an das zweite Ende des jeweiligen Wärmeaustauschrohrs fluiddicht angeschlossen ist.

Nach einer weiteren Ausführungsform der Erfindung ist vorgesehen, dass der erste Teil und der zweite Teil einer Wärmeisolierung in Fluidverbindung stehen.

Nach einer weiteren Ausführungsform der Erfindung ist vorgesehen, dass die ersten und zweiten Teile der Wärmeisolierung Teile einer gemeinsamen Isolierung sind, also einstückig ausgebildet sein.

Nach einer weiteren Ausführungsform der Erfindung ist vorgesehen, dass erste Teil der Wärmeisolierung als Schicht auf der Hülse vorgesehen ist.

Nach einer weiteren Ausführungsform der Erfindung ist vorgesehen, dass der zweite Teil der Wärmeisolierung als Hülsenkörper ausgebildet ist, der auf die Hülse oder in ein Ende des Wärmeaustauschrohrs gesteckt ist.

Nach einer weiteren Ausführungsform der Erfindung ist ein quer zu einer Achse der Hülse ausgebildeter Kragen vorgesehen, wobei die Dichtung zwischen dem Kragen und einer einlasskammerseitigen Fläche der Rohrplatte angeordnet ist. Nach einer weiteren Ausführungsform der Erfindung ist vorgesehen, dass der Kragen an der Hülse, vorzugsweise fluiddicht, angebracht oder einstückig mit der Hülse ausgebildet ist.

Nach einer weiteren Ausführungsform der Erfindung ist vorgesehen, dass die Dichtung eine Ringdichtung ist, mit einer zentralen Öffnung, durch die sich die Hülse erstreckt. Vorzugsweise liegt die Ringdichtung einlasskammerseitig auf der Rohrplatte auf.

Nach einer weiteren Ausführungsform der Erfindung ist vorgesehen, dass die Dichtung durch einen an der Rohrplatte angebrachten Halter, insbesondere einen Metallring, positioniert wird.

Nach einer weiteren Ausführungsform der Erfindung ist vorgesehen, dass die Dichtung durch die feuerfeste Auskleidung positioniert ist.

Nach einer weiteren Ausführungsform der Erfindung ist vorgesehen, dass der zweite Teil der Wärmeisolierung dichtend wirkt, insbesondere eine Gasdurchlässigkeit aufweist, die geringer als die des ersten Teils einer Wärmeisolierung ist. In Weiterbildung dieses Erfindungsgedankens ist nach einer weiteren Ausführungsform der Erfindung vorgesehen, dass die Dichtung und der zweite Teil einer Wärmeisolierung einteilig ausgebildet sind.

Das Wärmeaustauschrohr kann sich in die Öffnung der Rohrplatte hinein erstrecken, so dass das erste Ende in der Öffnung angeordnet ist. Der Freiraum kann außenseitig der Hülse zwischen Wärmeaustauschrohr und innerer Oberfläche der Öffnung vorliegen. Das Wärmeaustauschrohr kann mit dem ersten Ende an der wärmeaustauschkammerseitigen Fläche der Rohrplatte angebracht sein oder sich teilweise in die Öffnung hinein erstrecken. Nach einer weiteren Ausführungsform der Erfindung ist vorgesehen, dass ein Hülsenabschnitt der Hülse sich ausgehend vom ersten Ende des Wärmeaustauschrohrs entlang einer inneren Umfangsfläche der Öffnung der Rohrplatte erstreckt, so dass der Freiraum zwischen einem Außenumfang des Hülsenabschnitts und einer inneren Umfangsfläche der Öffnung ausgebildet ist. Das erste Ende des Wärmeaustauschrohrs endet vor dem einlassseitigen Rand der Öffnung, wodurch ein ringartiger Freiraum mit einer axialen Länge entsteht. Bei dieser Ausführungsform können der erste Teil und der zweite Teil einer Wärmeisolierung unmittelbar aneinander angrenzen.

Nach einer weiteren Ausführungsform der Erfindung ist vorgesehen, dass die Dichtung durch die feuerfeste Auskleidung positioniert ist. Die feuerfeste Verkleidung kann so an der Rohrplatte angebracht sein, dass sie eine Vorspannung auf die Dichtung ausübt, so dass die Grenzflächen der Dichtung, z.B. zur Rohrplatte hin und zur Hülse oder zum Kragen, dichtend geschlossen sind. Zudem kann der in der Einlasskammer vorherrschende Druck zu der Vorspannkraft beitragen.

Nach einer weiteren Ausführungsform der Erfindung ist vorgesehen, dass die feuerfeste Auskleidung sich über die gesamte in der Einlasskammer vorhandene Fläche der Rohrplatte erstreckt oder zumindest zu 80%. Davon ausgenommen sind die Endabschnitte der Hülsen, bzw. deren Öffnungen.

Die feuerfeste Verkleidung kann Materialien wie insbesondere hoch Aluminiumoxid-haltigen feuerfesten Beton, hoch Aluminiumoxid-haltige feuerfeste Steine oder hoch Aluminiumoxid-haltige Fasermaterialien umfassen.

Die feuerfeste Verkleidung kann eine Porosität aufweisen, von etwa 15% bis zu 95%. Die Porosität wird in Prozent ausgedrückt und beschreibt, wie viel des Volumens eines Materials aus offenen oder geschlossenen Poren besteht.

Die Isolierung kann insbesondere folgende Materialen umfassen: Keramische aluminiumoxid Fasermatten, z.B. RHI Pyrostop LD Matte 1600 oder Unifrax Saffil Matte, und keramisches Papier aus Aluminiumoxidfasern, z.B. RHI Pyrostop Papier 1600.

Als Dichtmaterial kommen unter anderem Produkte auf Basis von Graphit und/oder hoch Aluminiumoxid-haltigen Fasern, z.B. keramische Dichtschnüre, in Frage. Eine Dichtung kann aber auch metallische oder metalloxidische Bestandteile haben.

Nach einer weiteren Ausführungsform der Erfindung ist vorgesehen, dass die feuerfeste Auskleidung eine Wärmeleitfähigkeit aufweist, die im Bereich von 10% bis 100% der Wärmeleitfähigkeit der Dichtung liegt.

Nach einer weiteren Ausführungsform der Erfindung ist vorgesehen, dass die Dichtung Keramikbestandteile aufweist, insbesondere Keramikpapier und/oder keramische Fasern auf Aluminiumoxid- oder Zirkoniumoxidbasis.

Nach einer weiteren Ausführungsform der Erfindung ist vorgesehen, dass die Wärmeübertragungskammer als Dampferzeugerraum ausgebildet ist, in dem als Kühlmedium Wasser vorgesehen ist.

Es hat sich als besonders vorteilhaft herausgestellt, wenn die Hülse eine Einführlänge von 100-250 mm in das erste Ende des Wärmeaustauschrohrs hat. Die Isolierung zwischen der Hülse und dem Wärmeaustauschrohr hat eine Schichtdicke von vorzugsweise 2-6 mm. Die Dichtung hat zwischen den abzudichtenden Flächen vorzugsweise eine Dicke von 2-12 mm.

Nach einer weiteren Ausführungsform der Erfindung ist vorgesehen, dass der Abhitzekessel für das Prozessgas einer Dampfreformierung (Steam Methane Reforming, SMR), Autotherme Reformierung (Autothermal Reforming, ATR) oder Partialoxidation (Partial Oxidation, POx) ausgelegt ist.

Ein weiterer Aspekt der Erfindung betrifft eine Reformierungsanlage, umfassend einen Reaktor zur Erzeugung von Synthesegas aus einem Feedgasstrom und einem dem Reaktor nachgeschalteten Abhitzekessel, wie er hierin beschrieben ist. Der hierin beschriebene Abhitzekessel ist insbesondere aufgrund seiner korrosionsverhindernden

Eigenschaften und effektiven Temperaturkontrolle für solche Anlagen optimal geeignet.

Ein weiterer Aspekt der Erfindung betrifft die Verwendung eines Abhitzekessels, wie er hierin beschrieben ist, zur Kühlung eines Prozessgastroms aus einem Reformierungsprozess, insbesondere aus Dampfreformierung (Steam Methane Reforming, SMR), Autotherme Reformierung (Autothermal Reforming, ATR) oder Partialoxidation (Partial Oxidation, POx).

### FIGURENBESCHREIBUNG

Die Erfindung wird nachfolgend anhand von Figuren näher erläutert. Die Figuren zeigen ein bevorzugtes Ausführungsbeispiel, auf das die Erfindung jedoch nicht begrenzt ist. Die Figuren und die darin dargestellten Größenverhältnisse sind nur schematisch. Es zeigen:
- FIG. 1: schematisch in einer seitlichen Schnittansicht einen Abhitzekessels nach einer ersten Ausführungsform der Erfindung; und
- FIG. 2: Details des Abhitzekessels aus FIG. 1.

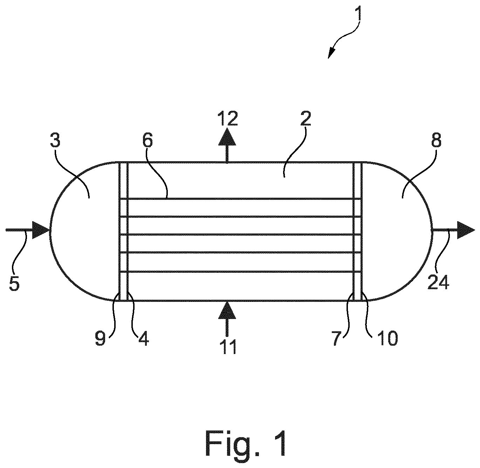

**FIG. 1** zeigt eine schematische Darstellung eines Abhitzekessels 1 in einer seitlichen Schnittansicht. Der Abhitzekessel 1 umfasst eine Wärmeaustauschkammer 2 in Form einer Dampfkammer. Eine Einlasskammer 3 stellt eine Fluidverbindung zwischen einer ersten eingangsseitigen Rohrplatte 4 und einer Transferleitung 5 her, die heißes Synthesegas aus einem Reformierungsprozess liefert. Mehrere Wärmeaustauschrohre 6 erstrecken sich parallel zwischen der eingangsseitigen Rohrplatte 4 und einer zweiten Rohrplatte 7. Die Wärmeaustauschrohre 6 sind jeweils an Öffnungen in den Rohrplatten 4 und 7 angeschlossen und stellen eine Fluidverbindung zwischen der Einlasskammer 3 und einer Auslassammer 8 her. Die Rohrplatten 4 und 7 bilden eine dichtende Trennwand zwischen der Wärmeaustauschkammer 2 und der Einlasskammer 3 bzw. der Auslasskammer 8. Die Rohrplatte 4 ist einlasskammerseitig mit einer feuerfesten Verkleidung 9 versehen. Eine solche Verkleidung 10 kann, wie gezeigt, auch auf der auslassseitigen Fläche der zweiten Rohrplatte 7 vorgesehen sein. Das abgekühlte Synthesegas verlässt die Auslasskammer 8 über eine weitere Transferleitung 24.

Im Einsatz wird das heiße Synthesegas, das aus einem chemischen Prozess stammt, über die Transferleitung 5 in die Einlasskammer 3 eingespeist. Während des Betriebs werden die Wärmeaustauschrohre 6 in der Wärmeaustauschkammer 2 von einem Kühlmedium 11, hier Kühlwasser, umgeben, das in die Wärmeaustauschkammer 2 eingespeist wird. Von der Einlasskammer 3 aus strömt das Synthesegas durch die Öffnungen der einlassseitigen Rohrplatte 4 und die Wärmeaustauschrohre 6. Während es durch die Wärmeaustauschrohre 6 strömt, wird das Synthesegas durch das Kühlwasser 11 gekühlt. Dabei erhitzt das Kühlwasser und Wasserdampf 12 wird erzeugt. In der Wärmeaustauschkammer 2 liegt dann ein Wasser-Dampf Gemisch vor. Der Wasserdampf oder das Wasser-Dampf Gemisch werden zur Weiterverwendung aus der Wärmeaustauschkammer 2 geleitet. Das abgekühlte Synthesegas verlässt die Wärmeaustauschrohre 6 an der zweiten Rohrplatte 7 und tritt in die Auslasskammer 8 ein. Von der Auslasskammer 8 aus kann das Synthesegas entweder einem weiteren Verarbeitungszyklus oder einem zusätzlichen Kühlprozess unterzogen werden.

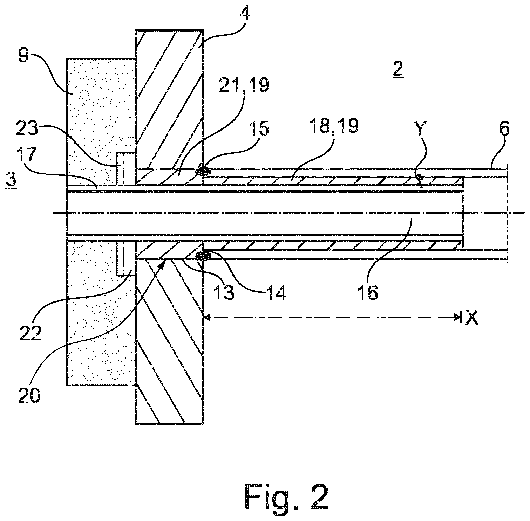

**FIG. 2** zeigt Details der einlasskammerseitigen Rohrplatte 4, insbesondere die Verbindung zwischen Wärmaustauschkammer 2 und Einlasskammer 3. Die Rohrplatte 4 weist eine Vielzahl an durchgehenden Öffnungen auf, von denen in FIG. 2 eine Öffnung 13 dargestellt ist. Das Wärmeaustauschrohr 6 ist wärmeaustauschkammerseitig mittels einer Schweißverbindung 15 mit einem ersten Ende 14 des Wärmeaustauschrohrs 6 fluiddicht an die Öffnung 13 angeschlossen. Eine sich entlang einer Hülsenachse 16 erstreckende Hülse 17 aus Metall ist teilweise in das erste Ende 14 des Wärmeaustauschrohr 6 über die Einführstrecke X eingeführt und steht von dem ersten Ende 14 vor. Die Hülse 17 steht einlasskammerseitig und wärmeaustauschkammerseitig entlang der Hülsenachse 16 von der Rohrplatte 4 vor. Einlasskammerseitig ist der von der Rohrplatte 4 vorstehende Teil der Hülse in die feuerfeste Verkleidung 9 eingebettet. Ihr einlasskammerseitiges Ende öffnet in die Einlasskammer 3. Die Hülse 17 stellt damit eine Fluidverbindung zwischen der Einlasskammer 3 und dem Wärmeaustauschrohr 6 bereit.

In dem Abschnitt X, entlang dem sich die Hülse 17 in das Wärmeaustauschrohr 6 erstreckt, ist am Außenumfang der Hülse 17 zwischen der Hülse 17 und der Innenfläche des Wärmeaustauschrohrs 6 ein erster Teil 18 einer Wärmeisolierung 19 angeordnet. Diese hat die Dicke Y. Der erste Teil 18 erstreckt sich vom hinteren Ende bis zur Schweißverbindung 15.

Zwischen der Außenfläche der Hülse 17 und der Innenfläche der durchgehenden Öffnung 13 ist ein ringförmiger Spalt bzw. Freiraum 20 ausgebildet, der wärmeaustauschkammerseitig durch das erste Ende 14 des Wärmeaustauschrohrs 6 und den ersten Teil 18 der Wärmeisolierung 19 begrenzt ist. In dem Freiraum 2 ist ein zweiter Teil 21 der Wärmeisolierung 19 angeordnet. Der erste Teil 18 der Wärmeisolierung 19 steht mit dem zweiten Teil 21 der Wärmeisolierung in Fluidverbindung.

Der Freiraum 20 ist zunächst gegenüber der feuerfesten Verkleidung 9 offen. Da die feuerfeste Verkleidung 9 gasdurchlässig ist, kann ein Gasstrom in den Freiraum 20 gelangen und die Wärmeisolierung 19 aus ihrer Position drücken, insbesondere den ersten Teil 18. Um diesem entgegenzuwirken, ist eine Dichtung 22 in Form einer Ringscheibe oder Dichtschnur als Ring ausgeformt vorgesehen.

Die Dichtung 22 weist eine zentrale Öffnung auf, durch die sich die Hülse 17 erstreckt. Die Hülse 17 weist einlasskammerseitig einen sich senkrecht zur Hülsenachse 16 erstreckenden umlaufenden Kragen 23 auf, der ebenfalls in die feuerfeste Verkleidung 9 eingebettet ist. Die Dichtung 22 liegt in axialer Richtung der Hülsenachse 16 an der einlasskammerseitigen Fläche der Rohrplatte 4 um die Öffnung 13 und an der axial gerichteten Fläche des Kragens 23 an und dichtet so den Freiraum 20 ab. Dadurch wird ein Eindringen des Gases in den Freiraum 20 und das Herausdrücken der Wärmeisolierung 19 aus ihrem Sitz verhindert.

Die Dichtung 22 besteht aus Keramikmaterialien, die eine geringere Wärmeleitfähigkeit als die Hülse 17 und die Rohrplatte 4 aufweisen. Im Betrieb erwärmt sich die Hülse 17 durch das einströmende Synthesegas auf eine Temperatur, die oberhalb des kritischen Bereichs für metal dusting liegt. Die Wärmeisolierung 19 sorgt dafür, dass das Wärmeaustauschrohr 6 und die Rohrplatte 4 nicht übermäßig aufwärmen, insbesondere in den für metal dusting relevanten Bereich. Gleichzeitig verhindert die Wärmeisolierung 19 ein Abkühlen der Hülse 17. Die Dichtung 22 verhindert zudem einen Wärmeübergang von der Hülse 17 und ihrem Kragen 23 in die Rohrplatte 4.

### Bezugszeichenliste

- 1: Abhitzekessel
- 2: Wärmeaustauschkammer
- 3: Einlasskammer
- 4: Rohrplatte
- 5: Transferleitung für Prozessgas
- 6: Wärmeaustauschrohr
- 7: zweite Rohrplatte
- 8: Auslasskammer
- 9: feuerfeste Verkleidung
- 10: feuerfeste Verkleidung
- 11: Kühlmedium (Wasser)
- 12: Wasserdampf
- 13: Öffnung in Rohrplatte
- 14: erste Ende des Wärmeaustauschrohrs
- 15: Schweißverbindung
- 16: Hülsensachse
- 17: Hülse
- 18: erster Teil der Wärmeisolierung
- 19: Wärmeisolierung
- 20: Freiraum
- 21: zweiter Teil der Wärmeisolierung
- 22: Dichtung
- 23: Kragen
- 24: Transferleitung
- X: Einführstrecke Hülse in Wärmeaustauschrohr
- Y: Dicke Wärmeisolierung erster Teil

## Patentansprüche

1. Abhitzekessel (1) zum Kühlen eines durch mehrere Wärmeaustauschrohre (6) strömenden Prozessgastroms aus einem Reformierungsprozess, der in einer chemischen Prozessanlage gebildet wird, umfassend:
eine Wärmeaustauschkammer (2) zum Aufnehmen eines die Wärmeaustauschrohre (6) umgebenden flüssigen Kühlmediums;
wenigstens eine Rohrplatte (4), um eine dichte Trennwand zwischen der Wärmeaustauschkammer (2) und einer Einlasskammer (3) für das zu kühlende Prozessgas zu bilden,
wobei die Rohrplatte (4) für jedes Wärmeaustauschrohr (6) eine durchgehende Öffnung (13) aufweist, die an ein erstes Ende (14) des jeweiligen Wärmeaustauschrohrs (6) fluiddicht angeschlossen ist;
eine in der Öffnung (13) angeordnete Hülse (17), die einlasskammerseitig und wärmeaustauschkammerseitig von der Rohrplatte (4) vorsteht,
wobei einlasskammerseitig die Hülse (17) in eine feuerfeste Verkleidung (9) eingebettet ist, wobei die Hülse (17) teilweise in dem ersten Ende (14) des Wärmeaustauschrohrs (6) aufgenommen ist und zwischen der Hülse (17) und dem Wärmeaustauschrohr (6) ein erster Teil (18) einer Wärmeisolierung (19) angeordnet ist,
wobei zwischen einer inneren Umfangsfläche der Öffnung (13) der Rohrplatte (4) und der sich durch die Öffnung (13) erstreckenden Hülse (17) ein Freiraum (20) ausgebildet ist, in dem ein zweiter Teil (21) der Wärmeisolierung (19) angeordnet ist; und
eine Dichtung (22), die den Freiraum (20) gegenüber der Einlasskammer (3) abdichtet, wobei die Dichtung (22) eine geringere Wärmeleitfähigkeit als die Hülse (17) und/oder die Rohrplatte (4) aufweist und eine Gasdurchlässigkeit, die geringer ist als die des ersten und/oder des zweiten Abschnitts (18, 21) der Wärmeisolierung (19).

2. Abhitzekessel (1) nach Anspruch 1, wobei ein Hülsenabschnitt der Hülse (17) sich ausgehend vom ersten Ende (14) des Wärmeaustauschrohrs (6) entlang einer inneren Umfangsfläche der Öffnung (13) der Rohrplatte (4) erstreckt, so dass der Freiraum (20) zwischen einem Außenumfang des Hülsenabschnitts und einer inneren Umfangsfläche der Öffnung (13) ausgebildet ist.

3. Abhitzekessel (1) nach Anspruch 1 oder 2, wobei der erste Abschnitt (18) und der zweite Abschnitt (21) der Wärmeisolierung (19) in Fluidverbindung stehen.

4. Abhitzekessel (1) nach einem der vorhergehenden Ansprüche, umfassend einen sich quer zu einer Hülsenachse (16) der Hülse (17) ausgebildeten Kragen (23), wobei die Dichtung (22) zwischen dem Kragen (23) und einer einlasskammerseitigen Fläche der Rohrplatte (4) angeordnet ist.

5. Abhitzekessel (1) nach einem der vorhergehenden Ansprüche, wobei die Dichtung (22) durch einen an der Rohrplatte (4) angebrachten Halter, insbesondere einen Metallring, positioniert wird.

6. Abhitzekessel (1) nach einem der vorhergehenden Ansprüche, wobei die Dichtung (22) durch die feuerfeste Auskleidung (9) positioniert ist.

7. Abhitzekessel (1) nach einem der vorhergehenden Ansprüche, wobei die feuersfeste Auskleidung (9) sich über die gesamte in der Einlasskammer vorhandene Fläche der Rohrplatte (4) erstreckt oder zumindest zu 80%.

8. Abhitzekessel (1) nach einem der vorhergehenden Ansprüche, wobei die feuerfeste Auskleidung (9) eine Wärmeleitfähigkeit aufweist, die im Bereich von 10% bis 100% der Wärmeleitfähigkeit der Dichtung (22) liegt.

9. Abhitzekessel (1) nach einem der vorhergehenden Ansprüche, wobei die Dichtung (22) Keramikbestandteile aufweist, insbesondere Keramikpapier und/oder keramische Fasern.

10. Abhitzekessel (1) nach einem der vorhergehenden Ansprüche, wobei die Wärmeaustauschkammer (2) als Dampferzeugerraum ausgebildet ist, in dem als Kühlmedium Wasser vorgesehen ist.

11. Abhitzekessel (1) nach einem der vorhergehenden Ansprüche, wobei der Abhitzekessel für das Prozessgas einer Dampfreformierung (Steam Methane Reforming, SMR), Autotherme Reformierung (Autothermal Reforming, ATR) oder Partialoxidation (Partial Oxidation, POx) ausgelegt ist.

12. Abhitzekessel (1) nach einem der vorhergehenden Ansprüche, wobei die Hülse (17) aus Metall oder Keramik ist.

13. Reformierungsanlage, umfassend einen Reaktor zur Erzeugung von Synthesegas aus einem Feedgasstrom und einem dem Reaktor nachgeschalteten Abhitzekessel (1) nach einem der vorhergehenden Ansprüche.

14. Verwendung eines Abhitzekessels (1) nach einem der Ansprüche 1 bis 12 zur Kühlung eines Prozessgastroms aus einem Reformierungsprozess, insbesondere aus Dampfreformierung (Steam Methane Reforming, SMR), Autotherme Reformierung (Autothermal Reforming, ATR) oder Partialoxidation (Partial Oxidation, POx).
